# EUROPÄISCHE PATENTSCHRIFT

(11) **EP 0 749 396 B1**
(45) Veröffentlichungstag und Bekanntmachung des Hinweises auf die Patenterteilung: **21.01.1998**
(21) Anmeldenummer: 95911192.3
(22) Anmeldetag: 22.02.1995
(51) Int. Cl.: B65G 65/48, G01F 13/00, A47J 31/40

(54) **DOSIERAUTOMAT FÜR PULVERFÖRMIGES SCHÜTTGUT, INSBESONDERE KAFFEEPULVER**
AUTOMATIC METERING DEVICE FOR POWDERY BULK MATERIAL, IN PARTICULAR COFFEE POWDER
DOSEUR AUTOMATIQUE POUR PRODUIT PULVERULENT EN VRAC, NOTAMMENT POUR CAFE MOULU

(30) Priorität: 05.03.1994 DE 4408063
(43) Veröffentlichungstag der Anmeldung: 27.12.1996
(73) Patentinhaber: T+P Gesellschaft für Technik und Produktion mbH, 20148 Hamburg (DE)
(72) Erfinder: FREUND, Edgar, D-23558 Lübeck (DE)
(74) Vertreter: Meyer, Ludgerus A., Dipl.-Ing.
(86) Internationale Anmeldenummer: DE9500218
(87) Internationale Veröffentlichungsnummer: WO9523752

(56) Entgegenhaltungen:
- EP-A- 0 536 714
- DE-A- 2 900 647
- DE-A- 3 829 867
- DE-B- 1 085 819
- DE-B- 1 269 052

## Beschreibung

Die Erfindung betrifft einen Dosierautomaten für pulverförmiges Schüttgut, insbesondere Kaffeepulver, nach dem Oberbegriff des Anspruchs 1.

In Restaurants, Kantinen und anderen Serviceeinrichtungen werden häufig Kaffeemaschinen verwendet, denen Kaffeepulver portionsweise zuzuführen ist. Hierzu ist es allgemein bekannt, Dosierbehälter zu verwenden, die eine bestimmte Menge Kaffeepulver aufnehmen können. Für unterschiedliche Pulvermengen sind jedoch unterschiedliche Dosierbehälter erforderlich, da das Ablesen von Teilstrichen eines größeren Behälters ungenau und zeitaufwendig ist.

Aus der DE 38 29 867 C2 ist eine Dosiereinrichtung für Kaffeemehl bekannt, bei der eine handelsübliche Vakuumpackung in ein mit einem Aufschneidemesser versehenes Gehäuse eingeschoben wird, wodurch die Packung unterseitig geöffnet wird. Es ist eine um eine horizontale Achse drehbare Dosiervorrichtung vorhanden, die den Benutzer jeweils eine festgelegte Entnahmemenge aus der Packung entnehmen läßt.

Da Kaffeemehl jedoch die Eigenschaft hat, Brücken zu bilden, ist eine derartige Einrichtung nicht für professionelle Ansprüche verwendbar und erlaubt außerdem keine variable Dosierung.

Die DE-AS 12 69 052 offenbart einen zylinderförmigen Großbehälter mit einer seitlichen Öffnung, aus dem mittels einer während einer Drehung des Behälters über den Behälterboden streichenden Pflugeinrichtung das Schüttgut angetragen werden kann. Eine gezielte Dosierung der Abgabemenge ist nicht vorgegeben. Ferner sind keine Maßnahmen gegen eine Brückenbildung des Schüttguts genannt.

Schließlich zeigt die DE 29 00 647 Al eine Einrichtung zur Abgabe von Schüttgut aus einem trichterförmigen Behälter, bei dem die Fördermenge durch Feststellung des auf dem Förderband geförderten Gewichtes des Schüttguts regelbar ist.

Der Erfindung liegt die Aufgabe zugrunde, einen einfachen Dosierautomaten für pulverförmiges Schüttgut, insbesondere Kaffeepulver anzugeben, der in der Lage ist, eine wählbare Menge an Schüttgut auszugeben und bei dem verhindert ist, daß sich im Vorratsbehälter Pulverbrücken bilden.

Diese Aufgabe wird durch die im Anspruch 1 angegebene Erfindung gelöst. In Unteransprüchen sind bevorzugte Ausführungsformen der Erfindung dargestellt.

Gemäß der Erfindung ist ein Dosierautomat für pulverförmiges Schüttgut, insbesondere Kaffeepulver vorgesehen, bei dem ein Vorratsbehälter mit rotierender Wandung und feststehender Bodenplatte für das Schüttgut vorhanden ist. Die Bodenplatte weist eine Öffnung zu einem darunter angeordneten Förderer auf, in dem ein Förderorgan angeordnet ist, daß das Schüttgut zu einem Abgabeort befördert. Erfindungsgemäß wird die Wandung des zylinderförmigen Vorratbehälters während des Dosiervorgangs gedreht, wobei der Innenraum des Vorratsbehälters mit relativ zur Öffnung der Bodenplatte bewegbaren Mitnehmern versehen ist. Das Förderorgan ist außerdem mit einem Sensor zur Einstellung der Abgabemenge des Förderorgans nach entsprechender Vorgabe versehen.

Zum Antrieb der Wandung des Vorratsbehälters weist dieser vorzugsweise einen randseitigen antreibbaren Zahnkranz auf. Dieser kann als separater Ring an der Unterseite der Wandung des Vorratsbehälters ausgebildet sein. Dies hat den Vorteil, daß der Vorratsbehälter selbst beispielsweise aus Glas gefertigt sein kann, um seinen Inhalt visuell feststellen zu können, während der Antriebsring beispielsweise aus Metall gefertigt sein kann.

Das durch die ebene oder zur Einfüllöffnung des Förderorgans geneigte Bodenplatte des Vorratsbehälters in das Förderorgan einfallende Fördergut wird vorzugsweise über eine Förderschnecke zum Ausgang des Förderers befördert. Anstelle einer Förderschnecke kann auch ein Förderband vorgesehen sein. Die Verwendung einer Förderschnecke weist den Vorteil auf, daß die vom Förderorgan ausgegebene Fördermenge sich durch Einstellung der Zahl der Umdrehungen bzw. des Drehwinkels oder der Antriebszeit genau vorgeben läßt. Der Drehwinkel kann beispielsweise durch einen Magnetkontakt oder einer Lichtschranke festgestellt werden. Durch eine Steuereinrichtung kann der Drehwinkel bzw. die Zahl der Umdrehungen vorgegeben sein, wobei nach Erreichen des vorgegebenen Wertes die Antriebseinheit des Dosierautomaten abgeschaltet wird.

Zur Vermeidung von Pulverbrücken im Inneren des Behälters weist der Behälter vorzugsweise von der Innenwand ausgehend radial gerichtete Mitnehmer auf, die mit ihrem ersten Ende an der Behälterwand und ihrem zweiten Ende an einem zentral auf der Bodenplatte des Vorratsbehälters befindlichen nach oben hin sich verjüngenden Nabe befestigt sind. Diese Mitnehmer sind vorzugsweise nahe der Bodenplatte angeordnet, so daß sie bei Drehung des Behälters über die Bodenplatte streichen. Sie überqueren damit auch die Öffnung zum Förderer und verhindern damit, daß sich Brücken bilden können. Die konusförmige Gestalt der Nabe über der Mittelachse des Behälters verhindert dort ein Stauen des Schüttguts.

Die Mitnehmer sind insbesondere als Drahtspeichen ausgebildet.

Vorzugsweise ist die Wandung des Behälters über ein Kunststofflager auf der feststehenden Bodenplatte gelagert. Hierdurch wird eine gute Abdichtung zwischen Behälterwandung und Bodenplatte erreicht.

Damit sich nicht oberhalb der Mitnehmer Brücken bilden können, können im vertikalen Abstand von den Mitnehmem Lockerungsflügel vorgesehen sein, die gegenüber den Mitnehmern stationär angeordnet sind. Die Lockerungsflügel sind vorzugsweise feststehend an einem mit der Bodenplatte verbundenen Ansatz befestigt, der zentral durch die stumpf abgeschnittene sich drehende Nabe geführt ist und der Kontur der Nabe folgend eine Spitze oberhalb der Nabe bildet.

Vorzugsweise wird der Behälter zusammen mit dem Förderorgan über einen gemeinsamen Motor mit nachgeschaltetem Untersetzungsgetriebe angetrieben.

Die erfindungsgemäße Einrichtung erlaubt eine komfortable Dosierung von Schüttgütern, insbesondere Kaffee, in kleinen Mengen, insbesondere für Restaurants, Kantinen usw. Es besteht keine Gefahr der Brückenbildung im Behälter und es ist eine genaue Dosierung des Schüttguts gewährleistet, wobei das zuerst eingefüllte Schüttgut auch zuerst wieder entleert wird.

Die Erfindung wird nachstehend anhand eines Ausführungsbeispiels näher erläutert. Es zeigen:
- Fig. 1: eine Seiten-Schnittansicht eines erfindungsgemäßen Dosierautomaten,
- Fig. 2: eine teilgeschnittene Aufsicht eines Dosierautomaten, und
- Fig. 3: eine Rückansicht eines Dosierautomaten.

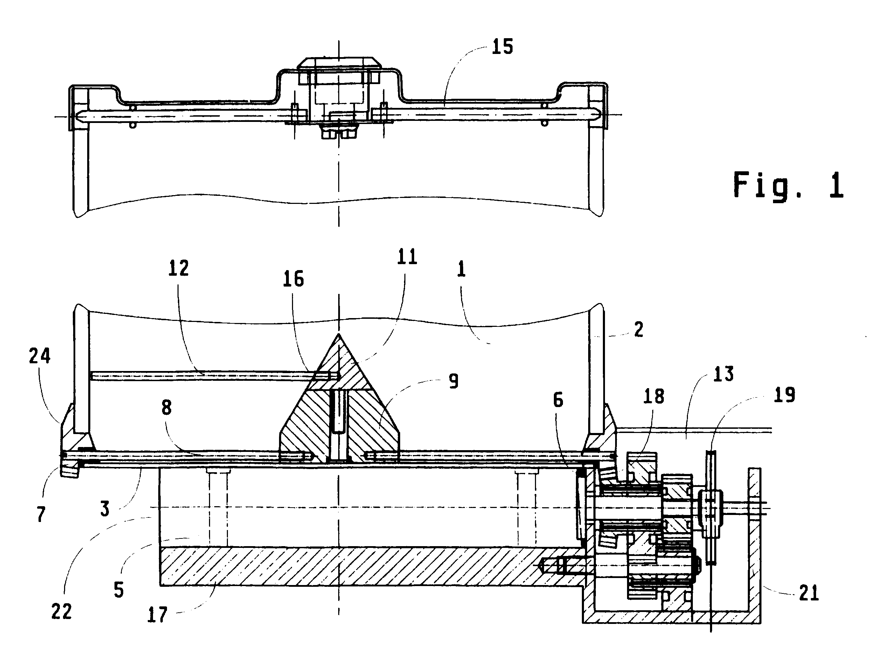

Fig. 1 zeigt einen Vorratsbehälter 1, der als zylindrischer Behälter, beispielsweise aus Glas, mit einer Wandung 2 ausgebildet ist. Der untere Rand des Behälters 2 ist in einem Ring 24 gelagert, der auf der Unterseite einen Zahnkranz 7 trägt. In einer innenseitigen unteren Aussparung ist ein Kunststofflagerring 10 eingesetzt, der als Lager der Wandung 2 auf der feststehenden Bodenplatte 3 als Gleitlager dient.

Unmittelbar oberhalb der Bodenplatte 3 sind Mitnehmer 8 vorgesehen, die an der Außenseite im Ring 24 befestigt sind und an ihrer Innenseite in einer Nabe 9 befestigt sind. Vorzugsweise sind auf der Bodenplatte 3 im Winkel von 120° verteilt drei Mitnehmer vorgesehen. Die Nabe 9 dreht sich zusammen mit den Mitnehmern 8 um einen in einer Bohrung 25 geführten Bolzen 27, der an der Bodenplatte 3 befestigt ist. Auf seiner stumpf abgeschnittenen Oberseite verlängert sich der Konus 9 in einen Ansatz 11, der an dem Bolzen 27 befestigt ist. In dem Ansatz 11 sind insbesondere drei Lockerungsflügel 12 in Bohrungen 16 befestigt, wobei die Lockerungsflügel 12, die als Drahtspeichen ausgebildet sind, bis kurz vor die Wandung 2 reichen. Da der Ansatz 11 über den Bolzen 27 mit der feststehenden Bodenplatte verbunden ist, ergibt sich bei Drehung des Vorratsbehälters 1 zwischen Mitnehmerstangen 8 und Lockerungsflügel 12 eine Relativbewegung, so daß jegliche Brückenbildung im Behälterraum verhindert wird.

Auf den oberen Rand der Wandung 2 ist ein Deckel 15 aufsetzbar, der insbesondere verschließbar ist.

Unterhalb der feststehenden Bodenplatte 3 befindet sich ein als Förderrohr 5 ausgebildeter Förderer, in das der Kaffee über eine Öffnung 4 hineinfallen kann. Das Förderrohr 5 weist eine vorderseitige Öffnung 22 auf, aus der der dosierte Kaffee in ein Aufnahmegefäß herausfallen kann.

Das Förderrohr 5 ist an einem Chassis 17 befestigt, an dessen Rückseite ein Getriebe 13 angeflanscht ist. Über das Getriebe 13 wird mittels eines Kegelrades 18 der mit einem Zahnkranz 7 versehene Ring 24 zur Drehung des Behälters 1 angetrieben. Ferner erfolgt mittels des Getriebes 13 der Antrieb der Förderschnecke 6, die im rohrförmigen Förderer 5 eingesetzt ist. Es ist ein Schneckenrad 19 vorgesehen, das in eine Schneckenwelle 20 eines Antriebsmotors 14 eingreift. Das Getriebe ist in einem Gehäuse 21 aufgenommen, das auf der Grundplatte 26 verankert ist.

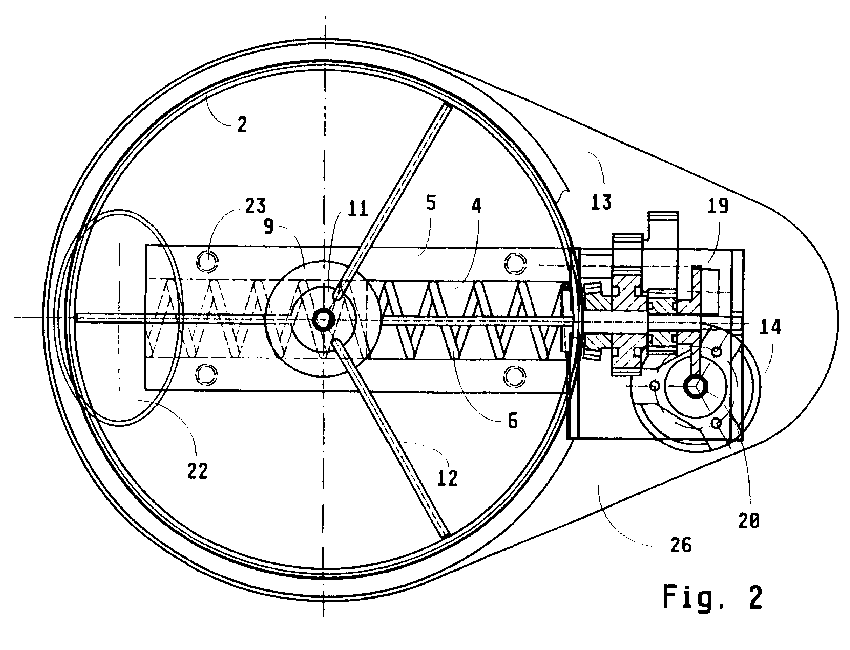

Fig. 2 zeigt eine Aufsicht auf den Dosierautomaten. Es ist deutlich erkennbar, daß drei Lockerungsflügel 12 vorgesehen sind, die zentral an dem Ansatz 11 befestigt sind. Es ist die Öffnung 4 zu erkennen, über die das in dem Vorratsbehälter befindliche Kaffeepulver in das Förderrohr 5 gelangen kann. Die Bodenplatte 3 ist mit dem Chassis 17 des Förderrohrs 5 über eine Verschraubung 23 verbunden. Die Figur zeigt deutlich die exzentrische Lage der Förderschnecke 6 im Förderrohr 5. Eine Winkeldrehung bzw. Drehung über mehrere Umdrehungen befördert das durch die Öffnung 4 in das Förderrohr 5 gefallene Kaffeepulver mittels der Förderschnecke 6 zum Ausgang 22. Die Betätigungsdauer der Förderschnecke 6 bestimmt die Menge des aus der Öffnung 22 abgegebenen Kaffeepulvers.

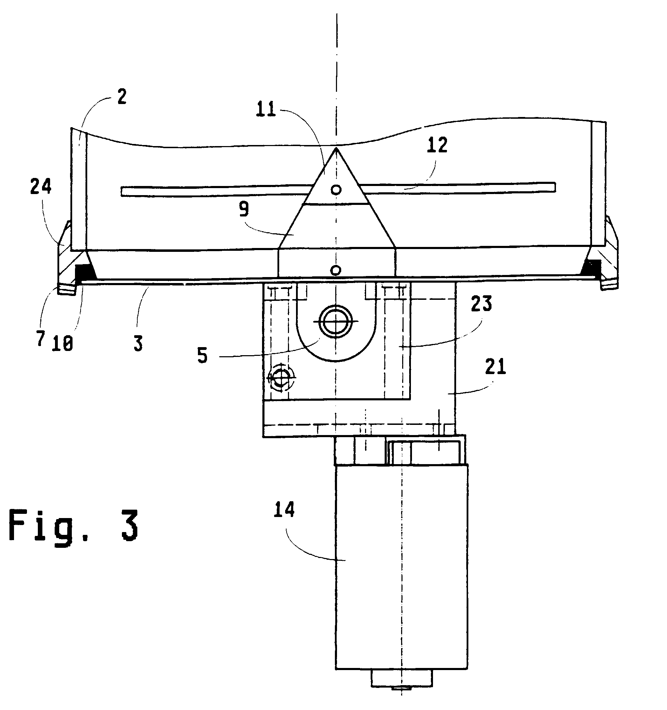

Fig. 3 zeigt eine Rückansicht des Dosierautomaten. Insbesondere zeigt diese Figur die Lage des Antriebsmotors 14 an der Unterseite des Getriebes 13, das in einem Gehäuse 21 aufgenommen ist.

Die erfindungsgemäße Einrichtung kann nicht nur für Kaffeepulver verwendet werden, sondem ist geeignet für jedes Schüttgut, das in bestimmter Menge zu dosieren ist, und daß insbesondere leicht Brücken bildet. Die Anordnung des Getriebes, des Antriebsmotors und des Förderorgans kann auch anders gewählt werden, solange die Zwecke der Erfindung erfüllt werden. Anstelle eines separaten Ringes 24 am untere Ende der Wandung 2 kann auch ein einstückiger Behälter verwendet werden, der einen Zahnkranz auf seiner Unterseite aufweist. Die Zahl und Anordnung der Lockerungsflügel und Mitnehmer kann variabel gehalten werden. Hierbei ist lediglich wichtig, daß in dem Behälter keine Bereiche durch Mitnehmer oder Lockerungsflügel unberührt bleiben, um zu verhindem, daß sich in bestimmten Bereichen Schüttgut ansammelt, das nicht mit den übrigen Bereichen vermischt wird bzw. ausgegeben wird.

Dem Dosierautomat kann eine Bedientafel zugeordnet sein, auf der durch verschiedene Tasten verschiedene Dosiermengen eingestellt werden können. Entsprechend der gewählten Taste wird dann die Antriebsdauer des Motors bestimmt oder eine bestimmte Anzahl von Umdrehungen des Förderorgans über einen Sensor gezählt. Die Zahl der Umdrehungen kann beispielsweise durch einen Magnetkontakt oder einer Lichtschranke erfaßt werden.

### Bezugszeichenliste

- 1: Vorratsbehälter
- 2: Wandung
- 3: Bodenplatte
- 4: Öffnung
- 5: Förderrohr
- 6: Förderschnecke
- 7: Zahnkranz
- 8: Mitnehmer
- 9: Nabe
- 10: Lager
- 11: Ansatz
- 12: Lockerungsflügel
- 13: Getriebe
- 14: Antriebsmotor
- 15: Deckel
- 16: Bohrung
- 17: Chassis
- 18: Kegelrad
- 19: Schneckenrad
- 20: Schneckenwelle
- 21: Gehäuse
- 22: Öffnung
- 23: Verschraubung
- 24: Ring
- 25: Bohrung
- 26: Grundplatte
- 27: Bolzen

## Patentansprüche

1. Dosierautomat für pulverförmiges Schüttgut, insbesondere Kaffeepulver, mit einem Vorratsbehälter (1) mit Wandung (2) und feststehender Bodenplatte (3) für das Schüttgut, wobei die Bodenplatte (3) eine Öffnung (4) zu einem darunter angeordneten Förderer (5) aufweist, in dem ein Förderorgan (6) angeordnet ist, das das Schüttgut zu einem Abgabeort befördert, wobei das Förderorgan mit einem Sensor zur Einstellung der Abgabemenge des Förderorgans versehen ist, dadurch gekennzeichnet, daß die Wandung (2) des zylinderförmigen Vorratsbehälters (1) relativ zur Bodenplatte drehbar ist, und daß der Innenraum des Vorratsbehälters mit relativ zur Öffnung der Bodenplatte bewegbaren Mitnehmern (8) versehen ist.

2. Dosierautomat nach Anspruch 1 dadurch gekennzeichnet, daß die Wandung (2) des Vorratsbehälters einen randseitigen antreibbaren Zahnkranz (7) aufweist.

3. Dosierautomat nach Anspruch 2, dadurch gekennzeichnet, daß der Zahnkranz (7) als separater Ring (24) an der Unterseite der Wandung (2) des Vorratsbehälters (1) ausgebildet ist.

4. Dosierautomat nach Anspruch 1, dadurch gekennzeichnet, daß die Wandung (2) des Vorratsbehälters über eine angetriebene Mittelachse mittels Speichenverbindung zur Wandung angetrieben wird.

5. Dosierautomat nach Anspruch 1, 2, 3 oder 4, dadurch gekennzeichnet, daß das Förderorgan (6) eine Förderschnecke ist.

6. Dosierautomat nach Anspruch 1, 2, 3 oder 4, dadurch gekennzeichnet, daß das Förderorgan ein Förderband ist.

7. Dosierautomat nach einem oder mehreren der vorhergehenden Ansprüche, dadurch gekennzeichnet, daß die Mitnehmer (8) radial von der Innenwand des Behälters ausgehen, und mit ihrem ersten Ende an der Behälterwand (2) und mit ihrem zweiten Ende an einer zentral auf der Bodenplatte (3) des Vorratsbehälters (1) befindlichen nach oben hin sich verjüngenden Nabe (9) befestigt sind.

8. Dosierautomat nach Anspruch 7, dadurch gekennzeichnet, daß die Mitnehmer (8) Drahtspeichen sind.

9. Dosierautomat nach Anspruch 1, dadurch gekennzeichnet, daß die Wandung (2) des Behälters (1) über ein Kunststofflager (10) auf der feststehenden Bodenplatte (3) gelagert ist.

10. Dosierautomat nach Anspruch 7, dadurch gekennzeichnet, daß am oberen Ende der mit einer zentralen Bohrung (25) versehenen Nabe (9) ein kegelförmiger mit der Bodenplatte (3) verbundener Ansatz (11) vorgesehen ist, der radial nach außen weisende Lockerungsflügel (12) aufweist.

11. Dosierautomat nach einem oder mehreren der vorhergehenden Ansprüche, dadurch gekennzeichnet, daß das Förderorgan (6) und die Wandung (2) des Behälters (1) über ein Getriebe (13) von einem gemeinsamen Antriebsmotor (14) angetrieben werden.

12. Dosierautomat nach einem oder mehreren der vorhergehenden Ansprüchen, dadurch gekennzeichnet, daß das Förderorgan (6) und die Wandung (2) des Behälters (1) über getrennte Antriebsmotoren angetrieben werden.

13. Dosierautomat nach einem oder mehreren der vorhergehenden Ansprüche, dadurch gekennzeichnet, daß eine Steuereinheit zur Vorgabe einer gewünschten Abgabemenge des Förderorgans vorgesehen ist.

14. Dosierautomat nach Anspruch 1 und 13, dadurch gekennzeichnet, daß die Feststellung der Abgabemenge durch Vorgabe einer vorwählbaren Antriebszeit des Förderorgans erfolgt.

15. Dosierautomat nach Anspruch 5 und 13, dadurch gekennzeichnet, daß die Feststellung der Abgabemenge durch Vorgabe der Umdrehungszahl eines Antriebsorgans der Förderschnecke erfolgt.

16. Dosierautomat nach Anspruch 15, dadurch gekennzeichnet, daß die Zahl der Umdrehungen durch einen Magnetkontakt oder eine Lichtschranke feststellbar ist.

17. Dosierautomat nach einem oder mehreren der Ansprüche, dadurch gekennzeichnet, daß die Bodenplatte (3) zum Förderorgan hin abfallend ausgebildet ist.

## Claims

1. Automatic dispenser for powdery bulk material, in particular coffee powder, having a storage container (1) with a wall (2) and a fixed bottom plate (3) for the bulk material, the bottom plate (3) having an opening (4) to a conveyor (5), arranged thereunder, in which is arranged a conveying organ (6) which conveys the bulk material to a delivery point, the conveying organ being provided with a sensor for setting the delivery quantity of the conveying organ, characterized in that the wall (2) of the cylindrical storage container (1) can be rotated relative to the bottom plate, and in that the inside of the storage container is provided with carriers (8) which can be moved relative to the opening of the bottom plate.

2. Automatic dispenser according to claim 1, characterized in that the wall (2) of the storage container has a toothed wheel (7) which can be driven rimside.

3. Automatic dispenser according to claim 2, characterized in that the toothed wheel (7) is developed as a separate ring (24) against the underside of the wall (2) of the storage container (1).

4. Automatic dispenser according to claim 1, characterized in that the wall (2) of the storage container is driven via a driven centre axle by means of a spoke connection to the wall.

5. Automatic dispenser according to claim 1, 2, 3 or 4, characterized in that the conveying organ (6) is a conveying screw.

6. Automatic dispenser according to claim 1, 2, 3 or 4, characterized in that the conveying organ is a conveyor belt.

7. Automatic dispenser according to one or more of the preceding claims, characterized in that the carriers (8) start radially from the inside wall of the container, and are secured with their first end to the container wall (2) and with their second end to an upward-tapering boss (9) which is located centrally on the bottom plate (3) of the storage container (1).

8. Automatic dispenser according to claim 7, characterized in that the carriers (8) are wire spokes.

9. Automatic dispenser according to claim 1, characterized in that the wall (2) of the container (1) is housed on the fixed bottom plate (3) via a plastic bearing (10).

10. Automatic dispenser according to claim 7, characterized in that there is arranged, at the upper end of the boss (9) which is provided with a central bore (25), a conical projection (11) which is connected to the bottom plate (3) and which has radially outward-pointing loosening vanes (12).

11. Automatic dispenser according to one or more of the preceding claims, characterized in that the conveying organ (6) and the wall (2) of the container (1) are driven via a gear unit (13) by a common drive motor (14).

12. Automatic dispenser according to one or more of the preceding claims, characterized in that the conveying organ (6) and the wall (2) of the container (1) are driven via separate drive motors.

13. Automatic dispenser according to one or more of the preceding claims, characterized in that a control unit is provided for pre-setting a desired delivery quantity of the conveying organ.

14. Automatic dispenser according to claims 1 and 13, characterized in that the fixing of the delivery quantity takes place by pre-setting of a pre-selectable drive time of the conveyor organ.

15. Automatic dispenser according to claims 5 and 13, characterized in that the fixing of the delivery quantity takes place by pre-setting of the speed of rotation of a drive organ of the conveying screw.

16. Automatic dispenser according to claim 15, characterized in that the number of revolutions can be fixed by a magnet contact or a light barrier.

17. Automatic dispenser according to one or more of the claims, characterized in that the bottom plate (3) is developed dropping away to the conveyor organ.

## Revendications

1. Doseur automatique pour un produit pulvérulent en vrac, notamment du café moulu, comprenant un réservoir (1) avec une paroi (2) et une plaque inférieure fixe (3) pour le produit en vrac, étant précisé que la plaque inférieure (3) présente une ouverture (4) menant à un élément d'alimentation (5) qui est disposé au-dessous et dans lequel est disposé un organe d'alimentation (6) qui amène le produit en vrac à un point de déversement, et que l'organe d'alimentation est pourvu d'un capteur destiné à régler la quantité qu'il distribue, caractérisé en ce que la paroi (2) du réservoir cylindrique (1) est apte à tourner par rapport à la plaque inférieure, et en ce que l'intérieur du réservoir est pourvu d'organes d'entraînement (8) mobiles par rapport à l'ouverture de la plaque inférieure.

2. Doseur automatique selon la revendication 1, caractérisé en ce que la paroi (2) du réservoir comporte une couronne dentée (7) située du côté du bord et apte à être actionnée.

3. Doseur automatique selon la revendication 2, caractérisé en ce que la couronne dentée (7) est conçue comme une bague séparée (24) sur le côté inférieur de la paroi (2) du réservoir (1).

4. Doseur automatique selon la revendication 1, caractérisé en ce que la paroi (2) du réservoir est actionnée par l'intermédiaire d'un axe central actionné, grâce à une liaison par rayons avec la paroi.

5. Doseur automatique selon les revendications 1, 2, 3 ou 4, caractérisé en ce que l'organe d'alimentation (6) est une vis d'alimentation.

6. Doseur automatique selon les revendications 1, 2, 3 ou 4, caractérisé en ce que l'organe d'alimentation est un convoyeur à bande.

7. Doseur automatique selon l'une au moins des revendications précédentes, caractérisé en ce que les organes d'entraînement (8) partent radialement de la paroi intérieure du récipient et sont fixés, avec leur première extrémité, à la paroi (2) du récipient et, avec leur seconde extrémité, à un moyeu (9) qui est situé au centre, sur la plaque inférieure (3) du réservoir (1), et qui va en rétrécissant vers le haut.

8. Doseur automatique selon la revendication 7, caractérisé en ce que les organes d'entraînement (8) sont des rayons.

9. Doseur automatique selon la revendication 1, caractérisé en ce que la paroi (2) du récipient (1) est montée sur la plaque inférieure fixe (3) par l'intermédiaire d'un palier en matière plastique (10).

10. Doseur automatique selon la revendication 7, caractérisé en ce qu'il est prévu, à l'extrémité supérieure du moyeu (9) pourvu d'un perçage central (25), une pièce rapportée conique (11) qui est reliée à la plaque inférieure (3) et qui comporte des ailettes d'aérage (12) dirigées radialement vers l'extérieur .

11. Doseur automatique selon l'une au moins des revendications précédentes, caractérisé en ce que l'organe d'alimentation (6) et la paroi (2) du récipient (1) sont actionnés par un moteur d'actionnement commun (14), par l'intermédiaire d'une transmission (13).

12. Doseur automatique selon l'une au moins des revendications précédentes, caractérisé en ce que l'organe d'alimentation (6) et la paroi (2) du récipient (1) sont actionnés par l'intermédiaire de moteurs d'actionnement séparés.

13. Doseur automatique selon l'une au moins des revendications précédentes, caractérisé en ce qu'il est prévu une unité de commande pour prédéfinir une quantité souhaitée distribuée par l'organe d'alimentation.

14. Doseur automatique selon les revendications 1 et 13, caractérisé en ce que la quantité distribuée est déterminée grâce à une prédéfinition d'une durée d'actionnement de l'organe d'alimentation apte à être présélectionnée.

15. Doseur automatique selon les revendications 5 et 13, caractérisé en ce que la quantité distribuée est déterminée grâce à une prédéfinition du nombre de tours d'un organe d'actionnement de la vis d'alimentation.

16. Doseur automatique selon la revendication 15, caractérisé en ce que le nombre de tours peut être déterminé par un contact magnétique ou une barrière photo-électrique.

17. Doseur automatique selon l'une au moins des revendications, caractérisé en ce que la plaque inférieure (3) est inclinée vers l'organe d'alimentation.
